# EUROPÄISCHE PATENTSCHRIFT

(11) **EP 1 348 586 B1**
(45) Veröffentlichungstag und Bekanntmachung des Hinweises auf die Patenterteilung: **14.01.2004**
(21) Anmeldenummer: 02007012.4
(22) Anmeldetag: 27.03.2002
(51) Int. Cl.: B60J 7/12

(54) **Fahrzeugverdeckeinrichtung, insbesondere für Kleinwagen sowie Fahrzeug mit einer solchen Verdeckeinrichtung**
Convertible top, particularly for mini car and motor vehicle with such a convertible top
Toit convertible, en particulier pour voiturette et véhicule automobile comportant un tel toit convertible

(43) Veröffentlichungstag der Anmeldung: 01.10.2003
(73) Patentinhaber: Dura Convertible Systems GmbH, 50735 Köln (DE)
(72) Erfinder: Trojan, Alexander, 50735 Köln (DE)
(74) Vertreter: Strobel, Wolfgang, Dipl.-Ing.

(56) Entgegenhaltungen:
- EP-A- 1 080 966
- EP-A- 1 110 782
- DE-C- 19 934 892
- US-A- 6 048 021

## Beschreibung

Die vorliegende Erfindung betrifft eine Fahrzeugverdeckeinrichtung nach dem Oberbegriff des Anspruchs 1. Weiterhin betrifft die vorliegende Erfindung ein Kraftfahrzeug nach dem Oberbegriff des Anspruchs 6.

Offene Fahrzeuge, wie Cabriolets, Roadsters etc. treffen auf ständig steigende Beliebtheit. Dies erfolgt unabhängig von der Fahrzeugklasse. Auch Klein- und Kleinstwagen werden zunehmend in einer Ausführungsform mit einem zu öffnenden Verdeck angeboten.

Aus der DE 199 34 892 C1 ist ein derartiges verstellbares Faltdach für ein Kraftfahrzeug bekannt. Dieses Faltdach weist einen Verdeck-Bezugstoff auf, der an einem Verdeckgestänge mit drei Abschnitten gehalten ist, wobei ein hinterer Hauptbügel des Verdeckgestänges an seinem unteren Ende verschwenkbar am Kraftfahrzeug befestigt ist, so daß er aus einer im wesentlichen aufrechten Position in Schließstellung des Verdecks in eine Öffnungsstellung des Verdecks nach hinten unten verschwenkbar ist. Allerdings benötigt der beschriebene Mechanismus einen relativ hohen Platzbedarf im Stauraum des Fahrzeugs.

Der vorliegenden Erfindung liegt daher die Aufgabe zugrunde, eine Verdeckeinrichtung insbesondere für einen Kleinwagen zu schaffen, die besonders einfach und daher kostengünstig in ihrem Aufbau ist und besonders platzsparend im Fahrzeug untergebracht werden kann.

Diese Aufgabe wird durch die Merkmale des Anspruchs 1 gelöst.

Gemäß der vorliegenden Erfindung weist die Fahrzeugverdeckeinrichtung einen vorderen Abschnitt und einen hinteren Abschnitt auf, wobei jeder Abschnitt je Fahrzeugseite wenigstens einen Längsträger und wenigstens einen Spriegel zwischen den beiden Längsträgern aufweist. Es ist ein Versenkabschnitt vorgesehen, an dessen oberem Ende der rückwärtige Endbereich des hinteren Abschnitts angelenkt ist und der mit seinem unteren Ende an der Fahrzeugkarosserie angelenkt ist, und der von einer im wesentlichen aufrechten Position in Schließstetlung des Verdecks in eine untere Öffnungsstellung des Verdecks verschwenkbar ist. Die Erfindung ist dadurch gekennzeichnet, daß vor dem Verschwenken des Versenkabschnitts der vordere Abschnitt nach hinten über den hinteren Abschnitt verschwenkbar ist, und der vordere und der hintere Abschnitt zusammen nach unten verschwenkbar sind, wobei alle drei Abschnitte im wesentlichen parallel zueinander zu liegen kommen.

Dadurch wird erreicht, daß das Verdeck mit Hilfe des Versenkabschnitts in eine untere Position hinter dem wenigstens einen Fahrzeugsitz verschwenkt werden kann, wobei die Ausgestaltung der Verdeckeinrichtung äußerst platzsparend ist und sich damit besonders für Klein- und Kleinstwagen eignet.

Die Einfachheit des Verdeckaufbaus wird dadurch noch unterstützt, daß der Verbindungsbereich zwischen vorderem und hinterem Abschnitt durch einen Spriegel gebildet wird, der U-förmig ausgebildet ist und bezüglich der Längsträger, an denen er gelenkig gelagert ist, verschwenkbar ist. Bekanntlich sollen Fahrzeugverdecke entsprechend gespannt werden, um bei der Fahrt eine entsprechende stabile Außenhaut für das Fahrzeug zu bilden. Unter Spannung ist es jedoch in der Regel nicht möglich das Verdeck einzuziehen, sondern muß eine Entspannung des Stoffverdecks erfolgen, wonach die entsprechenden Verbindungseinrichtungen der Rahmenkonstruktion des Verdecks gelöst werden können. Mit Hilfe der einfach ausgestalteten Verschwenkbarkeit des Spriegels kann das Stoffverdeck von einer gespannten Lage in eine entspannte Lage und umgekehrt auf einfachste Weise überführt werden.

Weiterhin ist vorteilhaft, daß die Gelenkpunkte des Spriegels auch gleichzeitig die Gelenkpunkte der Gelenke sind, durch die die Längsträger des vorderen Abschnitts mit den Längsträgern des Abschnittsgelenken miteinander verbunden sind. Dies führt auch zu einer definierten Umlenkachse des vorderen Abschnitts des Verdecks bezüglich des hinteren Abschnitts. Bei eingezogener Lage des Spriegels zum Entspannen der Verdeckaußenhaut kann dann auf einfache Weise der vordere Abschnitt nach hinten über den hinteren Abschnitt geschwenkt werden.

Dadurch, daß der vordere Abschnitt in seinem Mittenbereich einen Spriegel aufweist, der verschwenkbar an den zugeordneten Längsträgern des Verdecks angeordnet ist, wird eine weitere Möglichkeit des Spannens des Verdecks geschaffen bzw. eine zusätzliche Lösungsmöglichkeit zur Entspannung des gespannten Verdecks. Dies führt auf einfache Weise zu einem wirksamen Spannen bzw. Entspannen des Verdecks.

Mit großem Vorteil hinsichtlich einer einfachen und leichten Konstruktion des Versenkabschnitts weist dieser je Fahrzeugseite einen gelenkig gelagerten Längsträger auf. Dieser ist einerseits mit der Fahrzeugkarosserie an seinem unteren Ende und andererseits an seinem oberen Ende mit dem hinteren Abschnitt gelenkig verbunden. Durch einfaches Verschwenken der zwischen den Längsträgern des Versenkabschnitts zusammengeklappten Verdeckabschnitte wird eine besonders einfache und platzsparende Möglichkeit des Verstauens des Fahrzeugverdecks im Innenraum des Fahrzeugs geschaffen.

Schließlich ergibt sich der Vorteil einer besonders kostengünstigen Konstruktion, wenn das Verdeck bzw. die Außenhaut separat am Rahmengestänge anbringbar bzw. lösbar ausgebildet ist.

Die vorliegende Erfindung umfaßt auch ein Fahrzeug insbesondere einen Kleinwagen, mit einer Fahrgastzelle zur Aufnahme von wenigstens einer Person, wobei unter Kleinwagen auch Kleinstwagen verstanden werden. Das erfindungsgemäße Fahrzeug zeichnet sich dadurch aus, daß es eine Verdeckeinrichtung wie oben beschrieben aufweist.

Vorteilhafterweise weist die Fahrgastzelle des Fahrzeugs seitlich je eine Seitenwandstrebe auf, die sich von dem Bereich unterhalb der Frontscheibe im wesentlichen horizontal nach hinten zu einem Überrollbügel erstreckt, wobei der Versenkabschnitt im hinteren Teil der Seitenwandstreben angelenkt ist.

Weitere Einzelheiten, Merkmale und Vorteile ergeben sich aus der nachfolgenden Beschreibung unter Bezugnahme auf die Zeichnungen. Darin zeigt:
- Fig. 1: eine schematische Seitenansicht eines Kleinwagens mit erfindungsgemäßer Verdeckeinrichtung im geschlossenen und gespannten Zustand,
- Fig. 2: die obere Hälfte einer Draufsicht auf das Fahrzeug gemäß Fig. 1;
- Fig. 3: eine analoge Ansicht zu Fig. 1, in der jedoch die Verdeckeinrichtung im entspannten und geschlossenen Zustand dargestellt ist;
- Fig. 4: eine analoge Ansicht zu Fig. 2, jedoch mit dem Zustand gemäß Fig. 3;
- Fig. 5: eine analoge Ansicht zu den Figuren 1 und 3, jedoch mit einem zweiten Schritt des Zusammenfalten des Verdecks, indem der vordere Abschnitt auf den hinteren Abschnitt umgeschwenkt ist;
- Fig. 6: eine halbseitige Draufsicht der Ansicht von Fig. 5 analog zu den Figuren 2 und 4;
- Fig. 7: eine dritte Stellung der erfindungsgemäßen Verdeckeinrichtung, in der der hintere und der vordere Abschnitt gemeinsam nach unten verschwenkt sind.
- Fig. 8: eine halbseitige Draufsicht auf die Darstellung gemäß Fig. 7;
- Fig. 9: eine Seitenansicht des Fahrzeugs, in der die Verdeckeinrichtung in ihre Verstauposition im Fahrzeug verschwenkt ist;
- Fig. 10: eine halbseitige Draufsicht auf die Darstellung gemäß Fig. 9
- Fig. 11: eine Seitenansicht des Fahrzeugs in Fahrbereitstellung bei geöffnetem Verdeck; und
- Fig. 12: eine halbseitige Draufsicht auf die Darstellung gemäß Fig. 11.

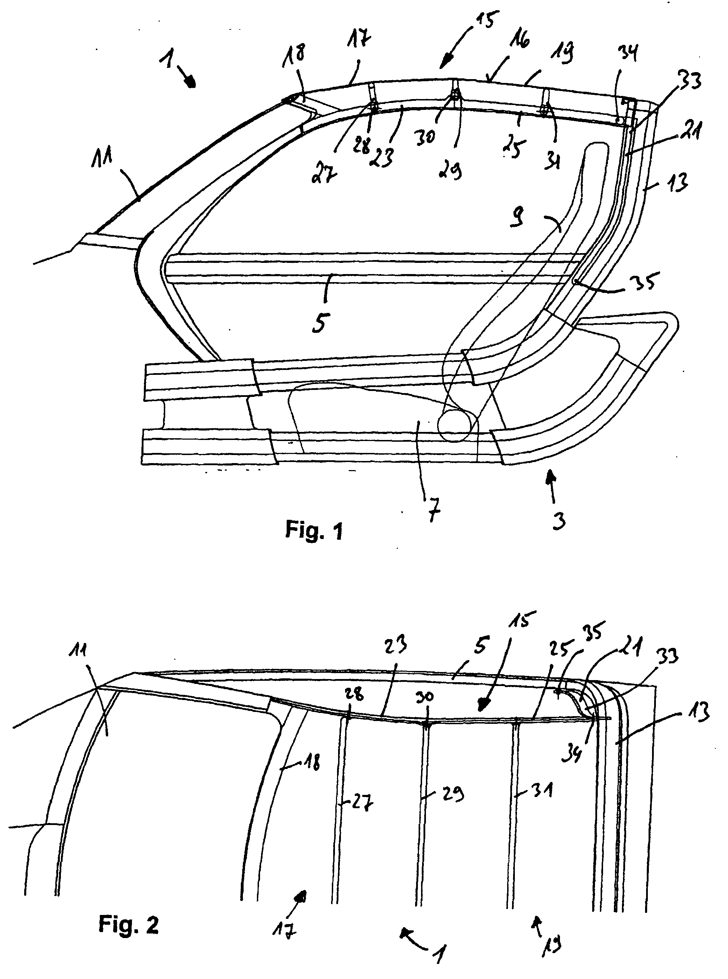

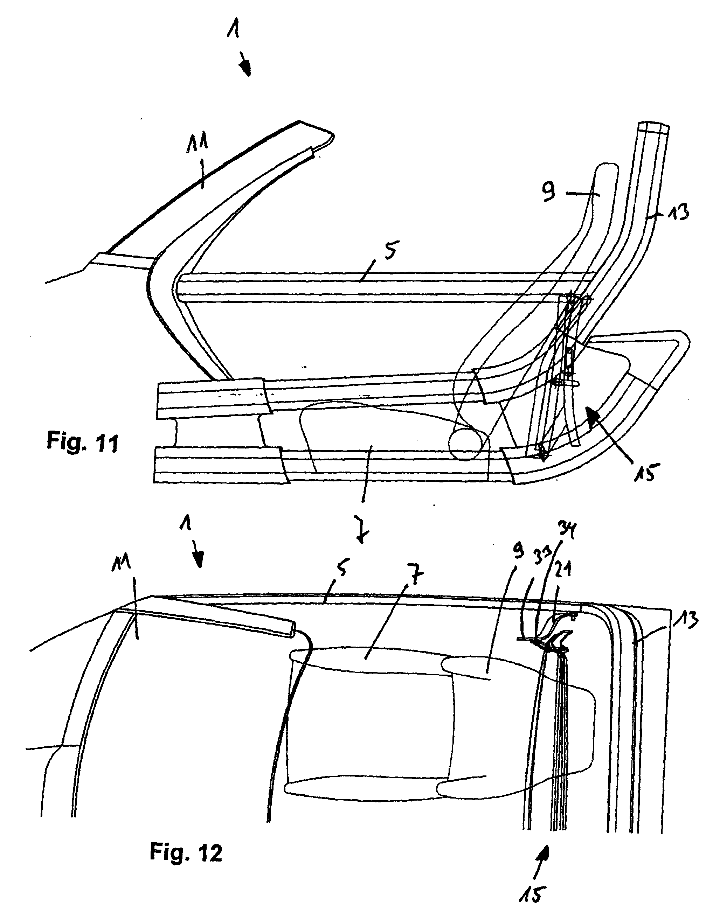

In der nachfolgenden Beschreibung der Figuren 1 bis 12 sind gleiche Elemente mit gleichen Bezugsziffern bezeichnet. Die Figuren 1, 3, 5, 7, 9 und 11 sind schematische Seitenansichten eines Fahrzeugs 1, wohingegen die Figuren 2, 4, 6, 8, 10 und 12 Draufsichten sind und aus Symmetriegründen nur die rechte Hälfte des Fahrzeugs zeigen. Dabei ist der im Ausführungsbeispiel vorhandene rechte Beifahrersitz nur in Figur 12 gezeigt.

Gemäß Figur 1 weist das erfindungsgemäße Fahrzeug 1 eine vereinfachte Rahmenstruktur 3 auf, die sich entlang einer jeden Fahrzeugseite erstreckt. Weiterhin begrenzt eine Seitenstrebe 5 die Fahrgastzelle oder den Fahrgastraum des Fahrzeugs 1 in dem sich schematisch dargestellt ein Sitz 7 befindet, der eine umklappbare Lehne 9 aufweist. Wie weiter in Figur 1 dargestellt, weist das Fahrzeug 1 in üblicher weise eine Windschutzscheibe 11 auf.

In Verbindung mit der Rahmenstruktur 3 ist im Heckbereich des Fahrzeugs 1 ein Überrollbügel 13 angeordnet. Zwischen der Oberseite der Windschutzscheibe 11 und dem oberen Bereich des Überrollbügels 13 erstreckt sich ein vorderer Abschnitt 17 und ein hinterer Abschnitt 19 einer Verdeckeinrichtung 15. Diese weist weiterhin einen Versenkabschnitt 21 auf, der weiter unten näher beschrieben werden wird.

Die Verdeckeinrichtung 15 umfaßt ein Stoffverdeck, also eine flexible Außenhaut 16, die von einem entsprechenden Rahmengestänge aufspannbar ist. Je Fahrzeugseite sind Längsträger 23 des vorderen Abschnitts 17 und 25 des hinteren Abschnitts 19 vorgesehen. Zur Aufspannung des Verdeckstoffes 16 sind weiterhin vorgesehen ein Windlauf 18 ober der Windschutzscheibe 11, ein Spriegel 27, der sich im vorderen Abschnitt 17 befindet und vorzugsweise im wesentlichen in dessen Mitte angeordnet ist. Der Spriegel 27 ist über Gelenke 28 verschwenkbar an dem Längsträger 23 angelenkt und kann manuell verschwenkt werden. Weiterhin ist ein Spriegel oder Querspriegel 29 vorgesehen, der ähnlich zum Spriegel 27 über Gelenke 30 in einem Gelenkpunkt mit den Längsträgem 23 und 25 verbunden ist. Der Gelenkpunkt 30 ist ein gemeinsamer Gelenkpunkt zwischen den Längsträgern 23 und 25.

Im wesentlichen in der Mitte des hinteren Abschnitts 19 der Verdeckeinrichtung 15 ist ein weiterer Spriegel 31 vorgesehen. Dieser ist, wie auch die Spriegel 27 und 29 im wesentlichen U-förimg ausgebildet, wobei die seitlichen Schenkel des U, wie aus Figur 1 ersichtlich unterschiedliche Längen aufweisen. Der Spriegel 31 ist im wesentlichen starr an den Längsträgern 25 angelenkt, kann also nicht verschwenkt werden.

Die Längsträger 25 sind an ihrem hinteren Ende bzw. Endbereich mit einem zugeordneten Seitenträger 33 des Versenkabschnitts 21 in Gelenkpunkten 34 gelenkig miteinander verbunden. Die Verdeckhaut selbst ist vorzugsweise am oberen Ende der Seitenträger 33 mit diesen verbunden.

Die Seitenträger 33 sind in ihrem unteren Bereich, wie uns besonders deutlich aus Figur 2 ersichtlich, in einem Gelenk 35 gelenkig mit der Seitenstrebe 5 verbunden.

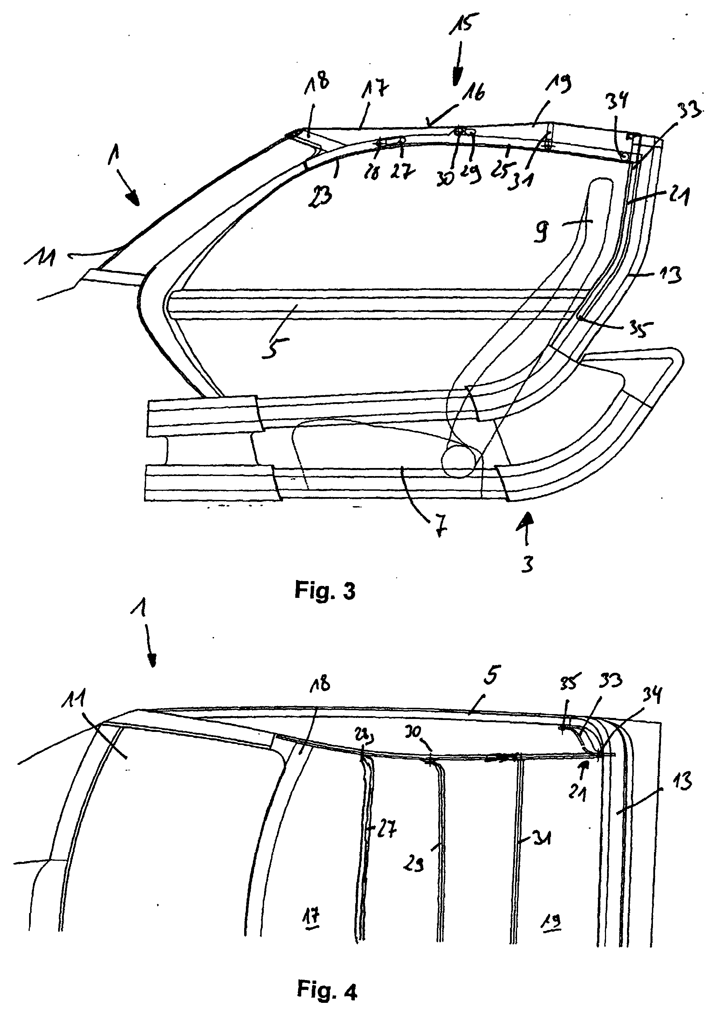

Wie bereits erläutert, ist in Figuren 1 und 2 die erfindungsgemäße Verdeckeinrichtung 15 im aufgespannten fahrbereiten Zustand des Fahrzeugs 1 dargestellt. Anhand der Figuren 3 bis 12 wird nunmehr beschrieben, wie die Verdeckeinrichtung von einer Schließstellung in eine Öffnungsstellung überführt wird.

Wie aus Figur 3 ersichtlich, werden zunächst die beiden Spriegel 27 und 29 nach hinten, also zur Fahrzeugrückseite umgelegt. Dadurch wird der Verdeckbezug 16 entspannt und die - nicht dargestellte - Spann- und Arretiervorrichtung der Verdeckeinrichtung 15 kann an dem oberen Abschnitt der Windschutzscheibe 11 gelöst werden. Insbesondere wird der im vorderen Abschnitt 17 angeordnete Windlauf 18 gelöst. In Figur 4 ist diese Stellung von Figur 3 in Draufsicht dargestellt.

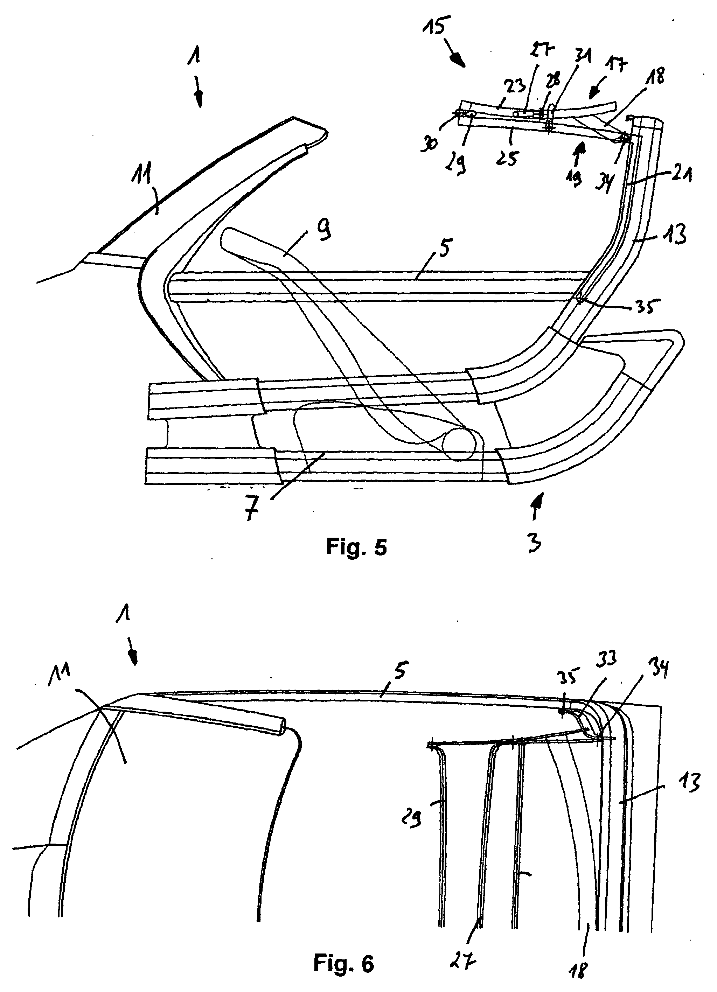

In den Figuren 5 und 6 ist eine erste Einklappstellung der erfindungsgemäßen Verdeckeinrichtung 15 dargestellt. Wie aus diesen Figuren ersichtlich, ist der vordere Abschnitt 17 nach oben und hinten über den hinteren Abschnitt 19 geklappt worden. Als Gelenke dienen hierbei die Gelenke 30.

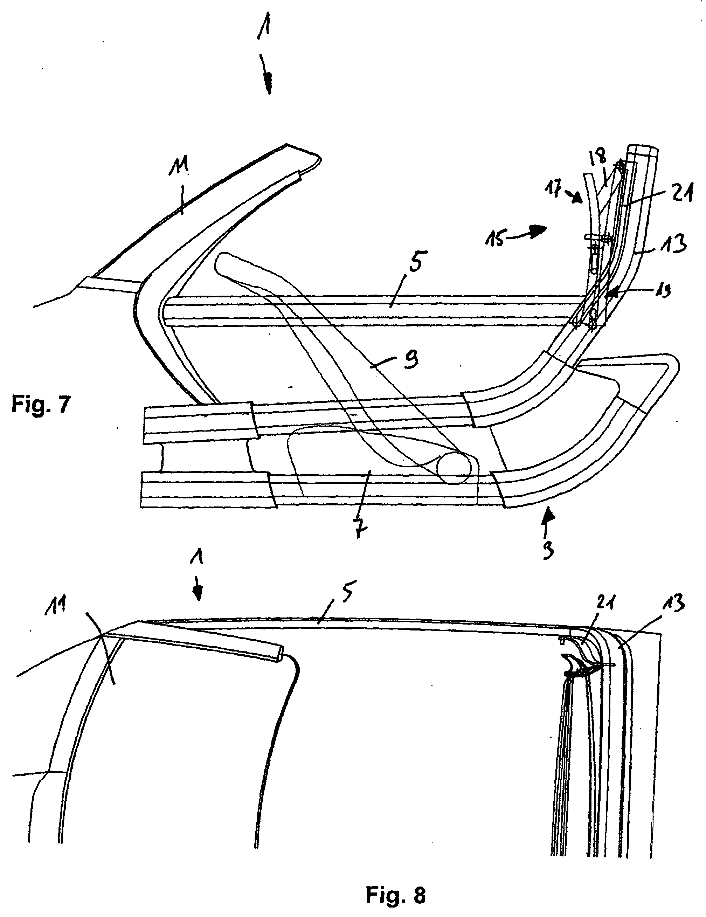

Die Rückenlehne 9 des Sitzes 7 ist nach vorne geschwenkt worden, um den nächsten Einzugsschritt der Verdeckeinrichtung zu ermöglichen bzw. zu erleichtern. Dieser ist in den Figuren 7 und 8 dargestellt. Der hintere Abschnitt 19, der mit dem Versenkabschnitt 21 über das Gelenk 34 gelenkig verbunden ist, wird nunmehr zusammen mit dem vorderen Abschnitt nach unten verschwenkt. In dieser Stellung gemäß Figuren 7 und 8 verlaufen der vordere Abschnitt 17, der hintere Abschnitt 19 und der Versenkabschnitt 21 im wesentlichen parallel bzw. aufeinander geklappt. In diesen Figuren wurde verzichtet alle Gelenke, Spriegel und Längsträger mit den jeweiligen Bezugsziffern zu versehen, da dies die Klarheit der Darstellung behindern würde.

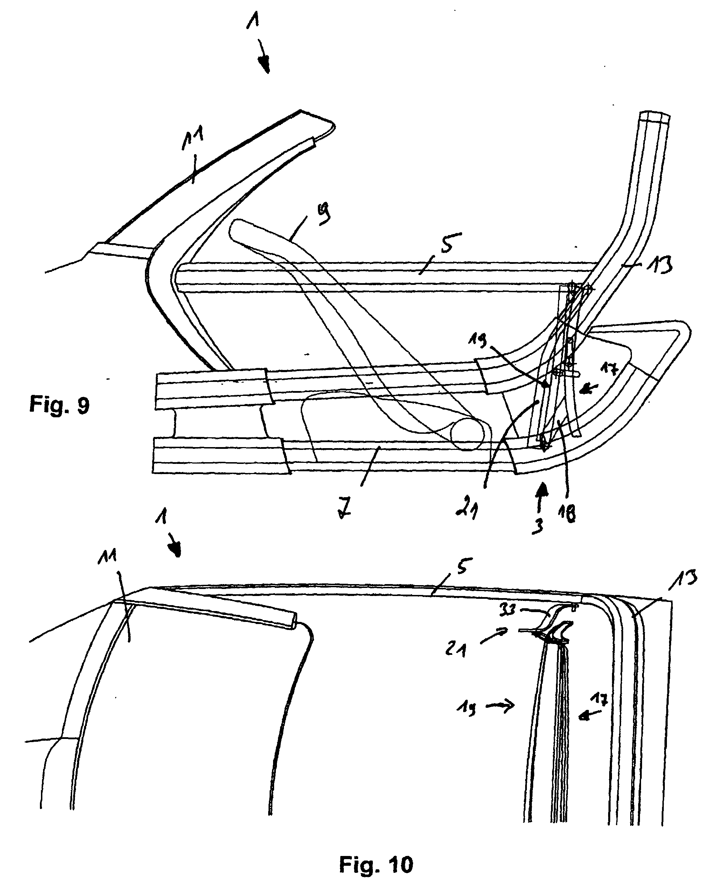

In den Figuren 9 und 10 ist der nächste Schritt des Einklappens der erfindungsgemäßen Verdeckeinrichtung 15 dargestellt. In diesem letzten Schritt des Einklappens der Verdeckeinrichtung 15 wird der Versenkabschnitt 21 respektive seine beiden Seitenträger 33 um das Gelenk 35 nach unten verschwenkt, wodurch sie in den unteren Bereich der Rückenlehne 9 zu liegen kommen.

Schließlich ist in den Figuren 11 und 12 die geöffnete Fahrbereitstellung dargestellt, wobei aus der Zusammenschau der Figuren 11 und 12 ersichtlich wird, daß die eingeklappte Verdeckeinrichtung 15 im Bereich der Rückenlehne hinter dieser verläuft und nur seitlich von der Rückenlehne 9 der Versenkabschnitt 21 mit seinem Gelenk 34 eine gedachte Querebene durch die Rückenlehne 9 schneidet, so daß mit Vorteil eine besonders kompakte Verdeckeinrichtung mit der vorliegenden Erfindung geschaffen wird, die hervorragend auch in Kleinstwägen verstaut werden kann.

Die vorliegende Erfindung ist selbstverständlich nicht auf die dargestellte Ausführungsform beschränkt. Insbesondere kann das Fahrzeug in herkömmlicherweise mit Türen und Seitenfenstem und einer C-Säule ausgebildet sein und der Versenkabschnitt 21 befindet sich dann im wesentlichen in einer Ebene vor bzw. in der Ebene der C-Säule.

Weiterhin wird unter dem Begriff eine Vielzahl von Fahrzeugen verstanden. Neben Kraftfahrzeugen können auch Räder, Kabinenroller, Solarmobile, Wasserfahrzeuge, etc. mit einer erfindungsgemäßen Verdeckeinrichtung versehen sein.

## Patentansprüche

1. Fahrzeugverdeckeinrichtung (15), insbesondere für Kleinwagen mit einem Verdeck (16) zum Überdecken des Fahrzeuginnenraums, das einen vorderen Abschnitt (17) und einen hinteren Abschnitt (19) aufweist, wobei jeder Abschnitt (17, 19) je Fahrzeugseite wenigstens einen Längsträger (23, 25) und wenigstens einen Spriegel (27, 29, 31) zwischen den Längsträgern (23, 25) aufweist, wobei weiterhin ein Versenkabschnitt (21) vorgesehen ist, an dessen oberem Ende der rückwärtige Endbereich des hinteren Abschnitts (19) angelenkt (34) ist, und der mit seinem unteren Ende an der Fahrzeugkarosserie angelenkt (35) ist, und der von einer im Wesentlichen aufrechten Position in Schließstellung des Verdecks in eine untere Öffnungsstellung des Verdecks verschwenkbar ist,
**dadurch gekennzeichnet, daß**
vor dem Verschwenken des Versenkabschnitts (21) der vordere Abschnitt (17) nach hinten über den hinteren Abschnitt (19) verschwenkbar ist, und der vordere und der hintere Abschnitt (17, 19) zusammen nach unten verschwenkbar sind, wobei alle drei Abschnitte (17, 19, 21) im wesentlichen parallel zueinander zu liegen kommen.

2. Verdeckeinrichtung nach Anspruch 1, **dadurch gekennzeichnet, daß** der Verbindungsbereich zwischen vorderem und hinterem Abschnitt (17, 19) durch einen Spriegel (29) gebildet wird, der U-förmig ausgebildet und bezüglich den Längsträgern (23, 25) an denen er gelenkig gelagert ist, verschwenkbar ist.

3. Verdeckeinrichtung nach Anspruch 2, **dadurch gekennzeichnet, daß** die Gelenkpunkte (30) des Spriegels auch gleichzeitig die Gelenkpunkte der Gelenke sind, durch die die Längsträger (23) des vorderen Abschnitts (17) mit den Längsträgem (25) des hinteren Abschnitts (19) gelenkig miteinander verbunden sind.

4. Verdeckeinrichtung nach einem der Ansprüche 1 bis 3, **dadurch gekennzeichnet, daß** der vordere Abschnitt (17) in seinem Mittenbereich einen Spriegel (27) aufweist, der verschwenkbar an den zugeordneten Längsträgern (23) des Verdecks angeordnet ist.

5. Verdeckeinrichtung nach einem der Ansprüche 1 bis 4, **dadurch gekennzeichnet, daß** der Versenkabschnitt (21) die Fahrzeugseite einen gelenkig gelagerten Längs- bzw. Seitenträger (33) aufweist.

6. Verdeckeinrichtung nach einem der Ansprüche 1 bis 5, **dadurch gekennzeichnet, daß** das Verdeck bzw. die Außenhaut separat am Rahmengestänge anbringbar bzw. lösbar ausgebildet ist.

7. Fahrzeug, insbesondere Kleinwagen, mit einer Fahrgastzelle zur Aufnahme von wenigstens einer Person, **dadurch gekennzeichnet, daß** es eine Verdeckeinrichtung (15) nach einem der Ansprüche 1 bis 6 aufweist.

8. Fahrzeug nach Anspruch 7, **dadurch gekennzeichnet, daß** die Fahrgastzelle seitlich je eine Seitenwandstrebe (5) aufweist, die sich von dem Bereich unterhalb der Frontscheibe (11) im wesentlichen horizontal nach hinten zu einem Überrollbügel (13) erstreckt, und daß der Versenkabschnitt (21) am hinteren Ende der Seitenstreben (5) angelenkt ist.

## Claims

1. Vehicle covering device (15), in particular for small cars having a cover (16) for covering the vehicle interior, comprising a front section (17) and a rear section (19), whereby every section (17, 19) has at least one longitudinal support (23, 25) for each vehicle side and comprises at least a roof arch (27, 29, 31) between the longitudinal supports (23, 25), whereby furthermore a countersink section (21) is provided, to the upper end of which the rear end region of the rear section (19) is articulated (34), and which is articulated (35) with its lower end to the vehicle body, and which can be pivoted from an essentially upright position in the closing position of the cover to a lower opening position of the cover,
**characterised in that**,
before the countersink section (21) is pivoted, the front section (17) can be pivoted backwards over the rear section (19), and the front and the rear section (17, 19) can be pivoted downwards together, whereby all three sections (17, 19, 21) come to lie essentially parallel to one another.

2. Covering device according to claim 1, **characterised in that** the connecting region between the front and rear sections (17, 19) is formed by a roof arch (29) which is formed in a U-shaped manner and which can be pivoted with regard to the longitudinal supports (23, 25) to which it is mounted in a jointed manner.

3. Covering device according to claim 2, **characterised in that** the joint points (30) of the roof arch are simultaneously the joint points of the joints through which the longitudinal supports (23) of the front section (17) are flexibly joined to the longitudinal supports (25) of the rear section.

4. Covering device according to one of claims 1 to 3, **characterised in that** the front section (17) comprises a roof arch (27) in its centre region which is a arranged in a pivoted manner at the assigned longitudinal supports (23) of the cover.

5. Covering device according to one of claims 1 to 4, **characterised in that** the countersink section (21) of the vehicle side comprises a flexibly mounted longitudinal or side support (33) which are mounted in a jointed manner.

6. Covering device according to one of claims 1 to 5, **characterised in that** the cover or the outer skin is formed mountable or detachable at the frame linkage in a separate manner.

7. Vehicle, in particular small car, having a passenger cell for receiving at least one person, **characterised in that** it comprises a covering device (15) according to one of claims 1 to 6.

8. Vehicle according to claim 7, **characterised in that** the passenger cell comprises a sidewall prop (5) at each side which extends from the region below the windscreen (11) essentially horizontally backwards to a roll bar (13) and that the countersink section (21) is articulated to the rear end of the side props (5).

## Revendications

1. Toit convertible (15), en particulier pour voiturette comportant une capote (16) pour recouvrir l'habitacle du véhicule, composée d'une section avant (17) et d'une section arrière (19), chaque section (17, 19) présentant sur chaque côté du véhicule au moins un longeron (23, 25) et au moins un arceau (27, 29, 31) entre les longerons (23, 25), une section escamotable (21) étant en outre prévue, sur l'extrémité supérieure de laquelle s'articule (34) la zone extrême arrière de la section arrière (19), qui s'articule (35) par son extrémité inférieure sur la carrosserie du véhicule, et qui peut pivoter d'une position essentiellement verticale dans la position de fermeture de la capote dans une position d'ouverture inférieure de la capote, **caractérisé en ce que**, avant le pivotement de la section escamotable (21), la section avant (17) peut pivoter vers l'arrière sur la section arrière (19), et les sections avant et arrière (17, 19) peuvent pivoter ensemble vers le bas, les trois sections (17, 19, 21) venant alors se situer de façon essentiellement parallèle entre elles.

2. Toit convertible suivant la revendication 1, **caractérisé en ce que** la zone de jonction entre la section avant et la section arrière (17, 19) est formée par un arceau (29), qui est configuré en U et peut pivoter par rapport aux longerons (23, 25), sur lesquels il s'articule.

3. Toit convertible suivant la revendication 2, **caractérisé en ce que** les points d'articulation (30) de l'arceau sont simultanément les points d'articulation des charnières, par lesquelles les longerons (23) de la section avant (17) s'articulent avec les longerons (25) de la section arrière (19).

4. Toit convertible suivant l'une des revendications 1 à 3, **caractérisé en ce que** la section avant (17) présente dans sa zone centrale un arceau (27), qui est disposé de façon pivotante sur les longerons associés (23) de la capote.

5. Toit convertible suivant l'une des revendications 1 à 4, **caractérisé en ce que** la section escamotable (21) présente sur chaque côté du véhicule un longeron ou support latéral (33) monté de façon articulée.

6. Toit convertible suivant l'une des revendications 1 à 5, **caractérisé en ce que** la capote ou la peau peut être montée ou démontée séparément sur la tringlerie du cadre.

7. Véhicule, en particulier voiturette, comprenant un habitacle pour recevoir au moins une personne, **caractérisé en ce qu'**il présente un toit convertible (15) suivant l'une des revendications 1 à 6.

8. Véhicule suivant la revendication 7, **caractérisé en ce que** l'habitacle présente sur chaque côté une jambe de force de panneau latéral (5), qui s'étend essentiellement de façon horizontale vers l'arrière, à partir de la zone sous-jacente au pare-brise (11), en direction d'un arceau de sécurité (13), et **en ce que** la section escamotable (21) s'articule sur l'extrémité arrière des jambes de force latérales (5).
